# EUROPÄISCHE PATENTSCHRIFT

(11) **EP 3 140 816 B1**
(45) Veröffentlichungstag und Bekanntmachung des Hinweises auf die Patenterteilung: **03.06.2020**
(21) Anmeldenummer: 15715182.0
(22) Anmeldetag: 23.03.2015
(51) Int. Cl.: G07C 5/08

(54) **VERFAHREN ZUR DIAGNOSE EINES ZUSTANDS IN EINEM FAHRZEUG**
METHOD FOR DIAGNOSIS OF A STATE IN A VEHICLE
PROCÉDÉ DE DIAGNOSTIC D'UN ÉTAT DANS UN VÉHICULE

(30) Priorität: 08.05.2014 DE 102014208611
(43) Veröffentlichungstag der Anmeldung: 15.03.2017
(73) Patentinhaber: Robert Bosch GmbH, 70442 Stuttgart (DE)
(72) Erfinder: TREIBER, Klaus, 72654 Neckartenzlingen (DE); WOERZ, Andreas, 73249 Wernau (DE); ENGELHARDT, Matthias, 73728 Esslingen (DE)
(86) Internationale Anmeldenummer: PCT/EP2015/056070
(87) Internationale Veröffentlichungsnummer: WO 2015/169497

(56) Entgegenhaltungen:
- EP-A2- 2 000 874
- WO-A2-2006/056355
- US-A1- 2005 171 721
- US-A1- 2009 248 236
- Larry Carley: "Controller Area Network (CAN-bus) Diagnostics", Web archive org , 3. April 2008 (2008-04-03), Seiten 1-3, XP002740817, Gefunden im Internet: URL:https://web.archive.org/web/2008040318 0951/http://www.talktomycar.co.uk/can.htm [gefunden am 2015-06-12]

## Beschreibung

Die Erfindung betrifft ein Verfahren zur Diagnose eines Zustands in einem Fahrzeug.

### Stand der Technik

Ein Kommunikationsbus, wie beispielsweise ein CAN-Kommunikationsbus in einem Fahrzeug, ist typischerweise mit einer Mehrzahl von elektronischen Steuereinheiten (sogenannte "electronic control units", ECUs) gekoppelt, die verschiedene Funktionen ausführen und einen jeweiligen Bus-Knoten bilden. So ist beispielsweise eine ECU für die Türsteuerung vorgesehen, mit denen ein Schließen bzw. Öffnen der Türen gesteuert und überwacht werden kann. Ein Microcontroller einer ECU, etwa einer Türsteuerung, empfängt beispielsweise über den CAN-Kommunikationsbus eine Bus-Botschaft, dass ein Fenster der Türe geöffnet werden soll. Der Microcontroller führt daraufhin einen sogenannten Task (einen Prozess) aus, der eine entsprechende Schaltung zum Öffnen der Fenster ansteuert.

Ein häufiger Fehlerfall in Kraftfahrzeugen ist eine Entladung der Bordnetzbatterie. Obwohl sich das Fahrzeug im Ruhezustand befindet (d.h. insbesondere, die Zündung ist ausgeschaltet und das Fahrzeug ist abgeschlossen), können defekte Anbauteile in Fahrzeugsystemen, defekte Steuereinheiten (ECUs), fehlerhafte Software oder inkompatible Hardwarestände einzelne Steuereinheiten aktivieren. Aktivierte Steuereinheiten senden dann oftmals permanent Botschaften auf den Fahrzeug-Kommunikationsbus (CAN-Kommunikationsbus) und entladen ungewollt die
Bordnetzbatterie auf Grund eines hohen Stromverbrauchs. In vielen Fällen sind fälschlicherweise aktivierte Steuereinheiten in der Lage, mehrere andere am CAN-Kommunikationsbus angeschlossene Steuereinheiten zu "wecken" bzw. deren "Schlaffunktion" aufzuheben. Die Stromaufnahme in solch einem Fall entlädt eine Bordnetzbatterie oftmals innerhalb weniger Stunden bzw. bei längerer Standzeit des Fahrzeugs.

Bisher ist es in einer Werkstatt möglich, den Ruhestrom der Bordnetzbatterie mit einem Amperemeter zu messen, und durch Ziehen der Sicherungen den Fehlerort (Stromkreis der für den erhöhten Stromfluss verantwortlich ist) einzukreisen. Der dadurch identifizierte Stromkreis muss aber nicht zwingend der fehlerauslösende Fehlerort sein. Es kann sich dabei um einen Folgefehler handeln, hervorgerufen durch eine Fehlfunktion an anderer Stelle im Fahrzeug. Es ist bislang nicht möglich, mittels eines Diagnose-Testgeräts den Ausgangsfehlerort für eine ungewünschte Steuereinheit-Aktivierung und der damit einhergehenden Batterieentladung zu ermitteln.

Die Schrift US 2005/0171721 offenbart ein Gerät und ein Verfahren zur Diagnose des CAN-Kommunikationsbus-Verkehrs eines Fahrzeugs. Vier Betriebsmodi werden beschrieben: CAN-Fault-Monitor-Modus, Communication-Monitor-Modus, Communications-Record-Modus und Configuration-Modus.

### Offenbarung der Erfindung

Es ist daher eine Aufgabe der Erfindung, ein Verfahren zur Diagnose eines Zustands in einem Fahrzeug zur Verfügung zu stellen, welche einer Werkstatt die Fehlersuche erleichtern.

Die Erfindung betrifft ein Verfahren zur Diagnose eines Zustands in einem Fahrzeug, das einen CAN-Kommunikationsbus aufweist, an den elektronische Steuereinheiten des Fahrzeugs angeschlossen sind, zur Identifikation einer Komponente, die für eine ungewollte CAN-Kommunikationsbus-Aktivierung nach Eintritt in einen Ruhezustand des Fahrzeugs verantwortlich ist, mit den folgenden Schritten:
Bereitstellen eines Ruhezustands des Fahrzeugs, in dem die elektronischen Steuereinheiten eingerichtet sind, in einem ordnungsgemäßen Betrieb, wenn kein Fehlerfall vorliegt, keine CAN-Botschaft über den CAN-Kommunikationsbus auszusenden, wobei zum Bereitstellen des Ruhezustands des Fahrzeugs eine Zündung des Fahrzeugs abgeschaltet wird und das Fahrzeug abgeschlossen wird, Koppeln eines Diagnose-Testgeräts mit wenigstens einem Diagnoseanschluss des Fahrzeugs, der mit dem CAN-Kommunikationsbus koppelbar ist, Überwachung des CAN-Kommunikationsbusses in einer permanenten Scan-Funktion durch das Diagnose-Testgerät hinsichtlich ausgesendeter CAN-Botschaften nach Eintritt in den Ruhezustand, Erfassung einer auf dem CAN-Kommunikationsbus nach Eintritt in den Ruhezustand ausgesendeten CAN-Botschaft und Zuordnung der erfassten CAN-Botschaft zu einer die CAN-Botschaft aussendenden elektronischen Steuereinheit durch das Diagnose-Testgerät, Bereitstellung von Information hinsichtlich eines zeitlichen Auftretens der erfassten CAN-Botschaft in einer Reihe von nach Eintritt in den Ruhezustand auf dem CAN-Kommunikationsbus auftretenden CAN-Botschaften durch das Diagnose-Testgerät, und Bereitstellung von Information zur Identifikation der die erfasste CAN-Botschaft aussendenden elektronischen Steuereinheit durch das Diagnose-Testgerät.

Mit Hilfe der Erfindung wird der Werkstatt die Fehlersuche bei der Fahrzeugdiagnose erleichtert. Die Erfindung ermöglicht eine schnellere und sichere Identifikation der Komponente, die für eine ungewollte CAN-Kommunikationsbus-Aktivierung verantwortlich ist. Statt wie bisher Stromkreise vom Bordnetz zu trennen, indem die entsprechenden Sicherungen gezogen werden, eröffnet die Erfindung die Möglichkeit einer permanenten Scan-Funktion des CAN-Kommunikationsbusses mit dem
Diagnose-Testgerät, um den CAN-Kommunikationsbus-Verkehr zu überwachen.

Vorteile der Erfindung sind, dass manuelle Aktivitäten wie ein Ziehen von Sicherungen entfallen können. Das Diagnose-Testgerät kann über Stunden den CAN-Kommunikationsbus-Verkehr überwachen, ohne dass Werkstattpersonal anwesend sein muss. Im Fehlerfall wird das Analyseergebnis gespeichert und kann danach ausgewertet werden. Auch kann der Ausbau von ordnungsgemäß funktionierenden Teilen vermieden werden. Die Erfindung ermöglicht es auch weniger intensiv ausgebildetem Werkstattpersonal eine verlässliche Fehlersuche am Fahrzeug durchzuführen. Die Erfindung ermöglicht darüber hinaus eine Beschleunigung der Fehlersuche und erhöht damit den Werkstattdurchlauf. Einsparung an Montagezeit könnte an den Endkunden weitergegeben werden.

Bevorzugt wird Information bereitgestellt, ob die erfasste CAN-Botschaft in der Reihe von auf dem CAN-Kommunikationsbus auftretenden CAN-Botschaften zuerst auftritt. Dadurch lässt sich die Ursache des Fehlers auf das Sub-System einschränken, zu welchem die Steuereinheit gehört, welche die erfasste CAN-Botschaft ausgesendet hat.

Gemäß einer weiteren Ausführungsform wird Information zu einer Reihenfolge der auf dem CAN-Kommunikationsbus auftretenden CAN-Botschaften nach Eintritt in den Ruhezustand bereitgestellt. Durch die Reihenfolge, in der die CAN-Botschaften gesendet werden, kann erkannt werden, dass der ungewollte CAN-Kommunikationsbus-Verkehr von einer bestimmten Steuereinheit, etwa dem Türsteuergerät der Fahrerseite, ausgelöst wurde.

Gemäß einer Ausführungsform erfolgt die Information hinsichtlich eines zeitlichen Auftretens der erfassten CAN-Botschaft anhand einer Auflistung wenigstens eines Teils der auf dem CAN-Kommunikationsbus auftretenden CAN-Botschaften seit Eintritt in den Ruhezustand.

In einer Ausführungsform der Erfindung wird ein Dateninhalt der erfassten CAN-Botschaft erfasst, gegebenenfalls entschlüsselt, und am Diagnose-Testgerät angezeigt. Dadurch ist eine noch genauere Fehlerdiagnose und/oder Fehlereingrenzung denkbar.

Vorzugsweise ist im Diagnose-Testgerät eine Zuordnungsinformation hinterlegt zur Identifikation der die erfasste CAN-Botschaft aussendenden elektronischen Steuereinheit anhand einer Identifizierungsinformation, welche in der erfassten CAN-Botschaft enthalten ist.

Erfindungsgemäß wird zum Bereitstellen des Ruhezustands des Fahrzeugs eine Zündung des Fahrzeugs abgeschaltet und das Fahrzeug abgeschlossen.

Gemäß einer Ausführungsform wird die Information zur Identifikation der die erfasste CAN-Botschaft aussendenden elektronischen Steuereinheit durch das Diagnose-Testgerät angezeigt und gespeichert.

In einer Ausführungsform wird ein Erfassungszeitpunkt, insbesondere in Form einer Uhrzeit, der erfassten CAN-Botschaft angezeigt. Eine Auswertung kann dann bequem am nächsten Arbeitstag erfolgen.

Gemäß einer Ausführungsform filtert das Diagnose-Testgerät CAN-Botschaften von elektronischen Steuereinheiten heraus, die eingerichtet sind, im Ruhezustand des Fahrzeugs in einem ordnungsgemäßen Betrieb (d.h. im Nicht-Fehlerfall) wenigstens eine CAN-Botschaft über den CAN-Kommunikationsbus auszusenden. Herstellerabhängig ist oftmals ein zeitlich definiertes Einschalten einzelner Steuereinheiten gewünscht. Dieses Verhalten kann durch das Diagnose-Testgerät ausgefiltert werden, um ein ungewünschtes Einschalten von Steuereinheiten, was zu größerem Stromverbrauch führt, zu identifizieren.

### Figurenbeschreibung

Die Erfindung wird im Folgenden anhand der beigefügten Figuren näher beschrieben. Dabei zeigen:
Figur 1 eine schematische Ansicht eines Ausführungsbeispiels einer Anordnung mit einem Diagnose-Testgerät zur Diagnose eines Zustands in einem Fahrzeug,
Figur 2 ein Ausführungsbeispiel eines durch ein Diagnose-Testgerät aufgezeichneten CAN-Kommunikationsbus-Verkehrs verursacht durch einen beispielhaft beschriebenen Defekt,
Figur 3 ein Ausführungsbeispiel einer Zuordnungstabelle, welche in einer Ausführungsform eines Diagnose-Testgeräts hinterlegt ist.

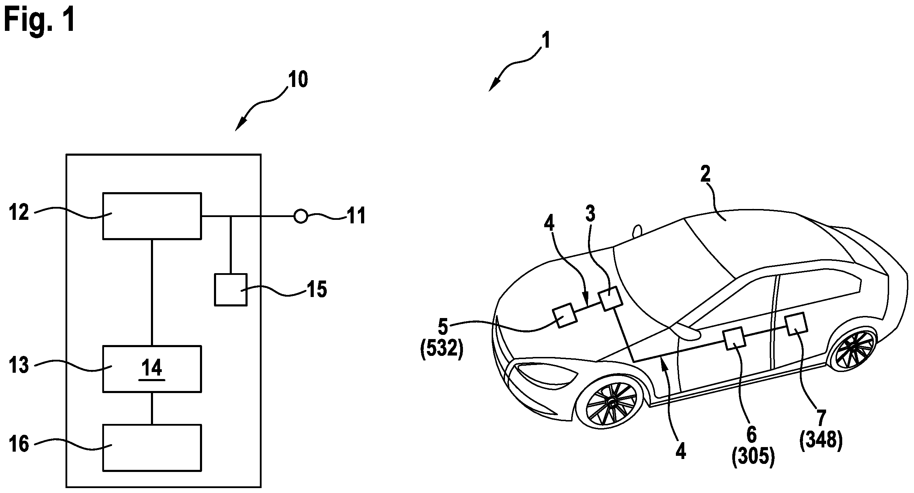

Figur 1 zeigt eine schematische Ansicht eines Ausführungsbeispiels einer Anordnung 1 mit einem Diagnose-Testgerät 10 zur Diagnose eines Zustands in einem Fahrzeug 2.

Das Fahrzeug 2 weist einen CAN-Kommunikationsbus 4 auf, wie er üblicherweise in Kraftfahrzeugen verwendet wird, an den elektronische Steuereinheiten (ECUs) des Fahrzeugs 2 angeschlossen sind. Beispielhaft sind hier die Steuereinheiten 5, 6, 7 dargestellt in Form einer Zentralelektronik 5, eines Türsteuergeräts Fahrerseite 6 und eines Türsteuergeräts hintere Beifahrerseite 7. In der Praxis sind auch andere bzw. weitere elektronische Steuereinheiten an den CAN-Kommunikationsbus 4 (im Folgenden kurz: CAN-Bus) angeschlossen.

Das Diagnose-Testgerät 10 wird über einen Anschluss 11 mit wenigstens einem Diagnoseanschluss 3 des Fahrzeugs 2 gekoppelt, der seinerseits mit dem CAN-Bus 4 koppelbar ist. Die Kopplung kann direkt oder indirekt über andere Komponenten erfolgen. Auch ist eine drahtgebundene oder drahtlose Kopplung zwischen Anschluss 11 und Diagnoseanschluss 3 denkbar.

Zu Diagnosezwecken wird das Fahrzeug 2 in einen Ruhezustand versetzt. Dazu wird die Zündung des Fahrzeugs 2 ausgeschaltet und das Fahrzeug 2 abgeschlossen. In diesem Ruhezustand ist wenigstens ein Teil der elektronischen Steuereinheiten 5, 6, 7 eingerichtet, in einem ordnungsgemäßen Betrieb keine CAN-Botschaft über den CAN-Bus auszusenden. Mit anderen Worten, wenn kein Fehlerfall vorliegt, senden die Steuereinheiten 5, 6, 7 oder ein Teil davon im Ruhezustand des Fahrzeugs keine CAN-Botschaften auf den CAN-Bus.

Das Diagnose-Testgerät enthält eine Überwachungseinrichtung 12 (etwa in Form eines Microprozessors) zur Überwachung des CAN-Busses 4 hinsichtlich ausgesendeter CAN-Botschaften, welche insbesondere nach Eintritt in den Ruhezustand des Fahrzeugs 2 auftreten. Hierzu ist die Überwachungseinrichtung 12 eingerichtet (etwa durch entsprechende Programmierung des Microprozessors), eine auf dem CAN-Bus 4 nach Eintritt in den Ruhezustand ausgesendete CAN-Botschaft zu erfassen und die erfasste CAN-Botschaft zu einer die CAN-Botschaft aussendenden elektronischen Steuereinheit zuzuordnen.

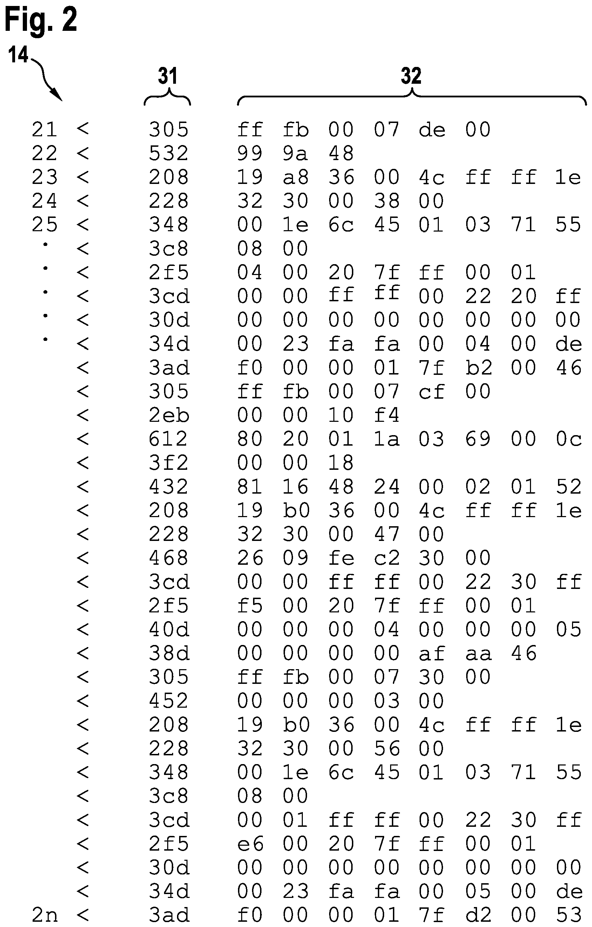

Das Diagnose Testgerät enthält auch eine Informationseinrichtung, etwa eine Anzeigeeinrichtung 13 und/oder eine akustische Informationseinrichtung 16. Diese ist, wie im folgenden anhand eines Beispiels näher erläutert, eingerichtet zur Bereitstellung von Information (etwa in Form einer Liste 14 gemäß Figur 2) hinsichtlich eines zeitlichen Auftretens einer bestimmten erfassten CAN-Botschaft (z.B. CAN-Botschaft 21 gemäß Figur 2) in einer Reihe von nach Eintritt in den Ruhezustand auf dem CAN-Bus 4 auftretenden CAN-Botschaften 21-2n (siehe Figur 2). Es wird darauf auch Information zur Identifikation der die erfasste CAN-Botschaft aussendenden elektronischen Steuereinheit bereitgestellt, wie im Folgenden anhand eines Beispiels näher erläutert.

Im Folgenden wird eine beispielhafte Ausführungsform der Erfindung näher erläutert. Der Fachmann wird erkennen, dass das Ausführungsbeispiel prinzipiell auf die Diagnose eines Zustands einer oder mehrerer beliebiger Komponenten in einem Fahrzeug angewandt werden kann.

Das Diagnose-Testgerät 10 wird mit dem Anschluss 11 am Diagnoseanschluss 3 des Fahrzeugs 2 angeschlossen. Die Zündung im Fahrzeug ist auszuschalten, das Fahrzeug 2 ist abzuschließen, das Fahrzeug befindet sich im Ruhezustand.

Das Diagnose-Testgerät 10 überwacht mittels der Überwachungseinrichtung 12 den CAN-Bus 4 auf den entsprechenden PINs am Diagnoseanschluss 3. Im Gutfall (d.h. im ordnungsgemäßen Betrieb, wenn kein Fehler vorliegt) werden im Ruhezustand des Fahrzeugs 2 von den Steuereinheiten 5, 6, 7 keine Botschaften auf den CAN-Bus gesendet. Es ist also kein CAN-Bus-Verkehr, welcher die Batterie entladen könnte, vorhanden.

Schaltet sich jedoch eine Steuereinheit, welche mit dem CAN-Bus verbunden ist, ein, wird automatisch von dieser Steuereinheit eine oder mehrere CAN-Botschaften auf den CAN-Bus gesendet. Wie in Figur 2 dargestellt, ist jede Botschaft 21-2n in CAN-Identifiern 31 (Identifizierungsinformation) "verpackt", die einer Steuereinheit als Adresse dienen. Das Diagnose-Testgerät 10 überwacht den CAN-Bus-Verkehr und ordnet die gesendeten Botschaften 21-2n der "Sender-Steuereinheit" zu. Dadurch lassen sich die Steuereinheiten, die als erstes CAN-Botschaften auf den CAN-Bus gesendet haben, lokalisieren.

Wird durch das Diagnose-Testgerät 10 eine CAN-Botschaft erkannt über eine Zuordnung des CAN-Identifiers 31, wird die entsprechende Steuereinheit als botschaftsauslösende Komponente im Speicher 15 gespeichert und auf der Informationseinrichtung 13 (etwa in Form eines Displays) angezeigt. Zusätzlich kann die genaue Uhrzeit des erkannten CAN-Bus-Verkehrs angezeigt werden. Eine Auswertung kann dann bequem am nächsten Arbeitstag erfolgen.

Herstellerabhängig ist oftmals ein zeitlich definiertes Einschalten einzelner Steuereinheiten gewünscht. Dieses Verhalten kann durch das Diagnose-Testgerät 10 ausgefiltert werden, um ungewünschtes Einschalten von Steuereinheiten, was zu größerem Stromverbrauch führt, zu identifizieren. Gemäß Figur 2 zeigt die erste Spalte den CAN-Identifier 31 (kann im übertragenen Sinn auch als Adresse bezeichnet werden) der jeweiligen CAN-Botschaft. Über ihn kann eine eindeutige Zuordnung gemacht werden, von welchem System bzw. Steuereinheit die CAN-Botschaft gesendet wurde. In der zweiten Spalte der Figur 2 ist der zugehörige Inhalt 32 einer jeweiligen CAN-Botschaft dargestellt.

Wird die Zündung des Fahrzeugs ausgeschaltet und das Fahrzeug verriegelt (es gibt unterschiedliche herstellerspezifische Bedigungen, welcher erfüllt sein müssen), werden im Gutfall die Steuereinheiten nach einer bestimmten Zeit in den sogenannten "Sleep-Mode" (Schlafmodus) versetzt und der CAN-Bus-Verkehr wird beendet.

Im Folgenden wird ein Beispiel für einen möglichen Schadenfall näher beschrieben. Durch Wasser/Feuchtigkeit im Türschloss der Fahrerseite wird der Türkontaktschalter durch Kurzschluss ein ungewolltes Signal erzeugen. Daraufhin wird automatisch das Tür-Steuergerät Fahrerseite 6 aufgeweckt und beginnt eine CAN-Botschaft 21 auf dem CAN-Bus 4 zu senden, siehe Figur 2. Das Tür-Steuergerät Fahrerseite 6 wird vom Diagnose-Testgerät 10 mit Hilfe des CAN-Identifiers 305 identifiziert. In gleicher Weise können die CAN-Botschaft 22 der Zentralelektronik 5 (über CAN-Identifier 532) und die CAN-Botschaft 25 dem Tür-Steuergerät hintere Beifahrerseite 7 (über CAN-Identifier 348) zugeordnet werden.

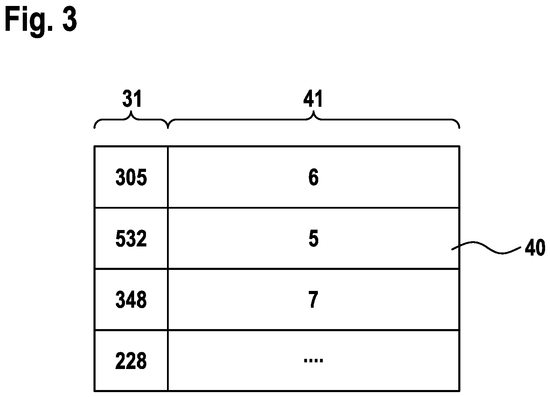

Eine Fehlereingrenzung kann vorgenommen werden, indem im Diagnose-Testgerät (im Speicher 15) gespeichert sich eine eindeutige Entschlüsselung 41 befindet, welche Steuereinheitadresse (CAN-Identifier) 31 zu welcher Steuereinheit gehört (exemplarisch dargestellt in Figur 3 anhand einer Zuordnungstabelle 40).

In der Auflistung 14, welche am Display 13 dargestellt wird, kann der CAN-Identifier 31 und/oder die Entschlüsselung 41 (mithin der Name der Steuereinheit) dargestellt werden. Es kann im Übrigen eine beliebige Darstellung der erfassten CAN-Botschaften gewählt werden, solange eine Information hinsichtlich eines (relativen und/oder absoluten) zeitlichen Auftretens der jeweils erfassten CAN-Botschaft erkenntlich wird. Eine solche Information kann z.B. explizit dargestellt werden (z.B. die Uhrzeit der Erfassung) und/oder auch dadurch erkenntlich sein, dass die jeweilige CAN-Botschaft zuerst gesendet wurde und entsprechend in der Liste zuerst dargestellt wird, oder die jeweilige CAN-Botschaft an einer bestimmten Stelle einer Reihenfolge von CAN-Botschaften steht, woraus sich auf ein bestimmtes (relatives) zeitliches Auftreten schließen lässt. Die Information zur Identifikation der die jeweilige CAN-Botschaft aussendenden elektronischen Steuereinheit kann durch das Diagnose-Testgerät in Form des CAN-Identifiers 31 und/oder in Form der Entschlüsselung 41 dargestellt werden. Diese Informationen können alternativ oder auch zusätzlich akustisch über einen Lautsprecher 16 ausgegeben werden.

Durch die Reihenfolge, in der die CAN-Botschaften gesendet werden, kann im vorliegenden Beispiel erkannt werden, dass der ungewollte CAN-Bus-Verkehr vom Türsteuergerät Fahrerseite 6 (CAN-Identifier 305) ausgelöst wurde. Die Ursache des Fehlers lässt sich auf dieses Sub-System einschränken. Sehr gut zu sehen ist, dass durch das "Aufwecken" des Türsteuergerätes Fahrerseite 6 auch viele andere Steuereinheiten mit aufgeweckt wurden. Diese Steuereinheiten senden nun alle CAN-Botschaften über den Can-Bus 4. Eine je nach Anzahl der Steuereinheiten entsprechend hohe Ruhespannung ist vorhanden, welche die Fahrzeugbatterie enorm belastet und entlädt.

Da man in der Werkstatt bis jetzt kaum Möglichkeiten hat, eine Fehlereingrenzung vorzunehmen, ist eine Fehlersuche sehr schwierig und zeitaufwendig, wie eingangs beschrieben. Durch diese Diagnosemöglichkeit gemäß der vorliegenden Erfindung ist eine genauere Systemeingrenzung möglich, welche die Fehlersuche erheblich vereinfacht und automatisiert. Wenn man eine entsprechende Entschlüsselung 41 des Dateninhaltes 32 der jeweiligen CAN-Botschaft hinterlegen kann, ist sogar eine noch genauere Fehlerdiagnose/Fehlereingrenzung denkbar.

Die Erfindung ermöglicht damit eine automatisierte Überwachung des CAN-Bus-Verkehrs, um ungewünschte Aktivierungen von elektronischen Steuereinheiten zu ermitteln. Die Erfindung kann in allen Fahrzeugen, welche einen CAN-Bus verwenden, der bis zum Diagnoseanschluss reicht, angewendet werden. Die Erfindung lässt sich einsetzen, um ohne Personalaufwand den CAN-Bus-Verkehr im Ruhezustand des Fahrzeugs zu überwachen, und im Fehlerfall die fehlerhafte Komponente bzw. das fehlerhafte Fahrzeugsystem zu identifizieren. Die Auswerte-Intelligenz befindet sich außerhalb des Fahrzeugs im Diagnose-Testgerät und ist damit herstellerübergreifend anwendbar.

## Patentansprüche

1. Verfahren zur Diagnose eines Zustands in einem Fahrzeug (2), das einen CAN-Kommunikationsbus (4) aufweist, an den elektronische Steuereinheiten (5, 6, 7) des Fahrzeugs angeschlossen sind, zur Identifikation einer Komponente, die für eine ungewollte CAN-Kommunikationsbus-Aktivierung nach Eintritt in einen Ruhezustand des Fahrzeugs verantwortlich ist, aufweisend die folgenden Schritte:
- Bereitstellen eines Ruhezustands des Fahrzeugs (2), in dem die elektronischen Steuereinheiten (5, 6, 7) eingerichtet sind, in einem ordnungsgemäßen Betrieb, wenn kein Fehlerfall vorliegt, keine CAN-Botschaft über den CAN-Kommunikationsbus (4) auszusenden, wobei zum Bereitstellen des Ruhezustands des Fahrzeugs (2) eine Zündung des Fahrzeugs (2) abgeschaltet wird und das Fahrzeug (2) abgeschlossen wird,
- Koppeln eines Diagnose-Testgeräts (10) mit wenigstens einem Diagnoseanschluss (3) des Fahrzeugs (2), der mit dem CAN-Kommunikationsbus (4) gekoppelt ist,
- Überwachung des CAN-Kommunikationsbusses (4) in einer permanenten Scan-Funktion durch das Diagnose-Testgerät (10) hinsichtlich ausgesendeter CAN-Botschaften (21-2n) nach Eintritt in den Ruhezustand,
- Erfassung einer auf dem CAN-Kommunikationsbus (4) nach Eintritt in den Ruhezustand ausgesendeten CAN-Botschaft (21) und Zuordnung der erfassten CAN-Botschaft (21) zu einer die CAN-Botschaft aussendenden elektronischen Steuereinheit (6) durch das Diagnose-Testgerät (10),
- Bereitstellung von Information (14) hinsichtlich eines zeitlichen Auftretens der erfassten CAN-Botschaft (21) in einer Reihe von nach Eintritt in den Ruhezustand auf dem CAN-Kommunikationsbus (4) auftretenden CAN-Botschaften (21-2n) durch das Diagnose-Testgerät (10), und
- Bereitstellung von Information (31, 41) zur Identifikation der die erfasste CAN-Botschaft (21) aussendenden elektronischen Steuereinheit (6) durch das Diagnose-Testgerät (10).

2. Verfahren nach Anspruch 1, wobei Information (14) bereitgestellt wird, ob die erfasste CAN-Botschaft (21) in der Reihe von auf dem CAN-Kommunikationsbus (4) auftretenden CAN-Botschaften (21-2n) zuerst auftritt.

3. Verfahren nach Anspruch 1 oder 2, wobei Information (14) zu einer Reihenfolge der auf dem CAN-Kommunikationsbus (4) auftretenden CAN-Botschaften (21-2n) nach Eintritt in den Ruhezustand bereitgestellt wird.

4. Verfahren nach einem der vorhergehenden Ansprüche, wobei die Information hinsichtlich eines zeitlichen Auftretens der erfassten CAN-Botschaft (21) anhand einer Auflistung (14) wenigstens eines Teils der auf dem CAN-Kommunikationsbus (4) auftretenden CAN-Botschaften (21-2n) seit Eintritt in den Ruhezustand erfolgt.

5. Verfahren nach einem der vorhergehenden Ansprüche, wobei ein Dateninhalt (32) der erfassten CAN-Botschaft (21) erfasst, gegebenenfalls entschlüsselt, und am Diagnose-Testgerät (10) angezeigt wird.

6. Verfahren nach einem der vorhergehenden Ansprüche, wobei im Diagnose-Testgerät (10) eine Zuordnungsinformation (40) hinterlegt ist zur Identifikation der die erfasste CAN-Botschaft (21) aussendenden elektronischen Steuereinheit (6) anhand einer Identifizierungsinformation (31), welche in der erfassten CAN-Botschaft (21) enthalten ist.

7. Verfahren nach einem der vorhergehenden Ansprüche, wobei die Information (31, 41) zur Identifikation der die erfasste CAN-Botschaft (21) aussendenden elektronischen Steuereinheit (6) durch das Diagnose-Testgerät (10) angezeigt und gespeichert wird.

8. Verfahren nach einem der vorhergehenden Ansprüche, wobei ein Erfassungszeitpunkt, insbesondere in Form einer Uhrzeit, der erfassten CAN-Botschaft (21) angezeigt wird.

9. Verfahren nach einem der vorhergehenden Ansprüche, wobei das Diagnose-Testgerät (10) CAN-Botschaften von elektronischen Steuereinheiten (5, 6, 7) herausfiltert, die eingerichtet sind, im Ruhezustand des Fahrzeugs (2) in einem ordnungsgemäßen Betrieb wenigstens eine CAN-Botschaft über den CAN-Kommunikationsbus (4) auszusenden.

## Claims

1. Method for diagnosing a state in a vehicle (2) having a CAN communication bus (4), to which electronic control units (5, 6, 7) of the vehicle are connected, for identifying a component which is responsible for unwanted CAN communication bus activation after the vehicle has entered an idle state, having the following steps of:
- providing an idle state of the vehicle (2) in which the electronic control units (5, 6, 7) are configured, during proper operation when there is no fault, not to emit a CAN message via the CAN communication bus (4), wherein, in order to provide the idle state of the vehicle (2), an ignition of the vehicle (2) is switched off and the vehicle (2) is shut off,
- coupling a diagnostic test device (10) to at least one diagnostic connection (3) of the vehicle (2), which diagnostic connection is coupled to the CAN communication bus (4),
- monitoring the CAN communication bus (4) in a permanent scanning function for emitted CAN messages (21-2n) after entering the idle state by means of the diagnostic test device (10),
- capturing a CAN message (21) emitted on the CAN communication bus (4) after entering the idle state and assigning the captured CAN message (21) to an electronic control unit (6) emitting the CAN message by means of the diagnostic test device (10),
- providing information (14) relating to temporal occurrence of the captured CAN message (21) in a series of CAN messages (21-2n) occurring on the CAN communication bus (4) after entering the idle state by means of the diagnostic test device (10), and
- providing information (31, 41) for identifying the electronic control unit (6) emitting the captured CAN message (21) by means of the diagnostic test device (10).

2. Method according to Claim 1, wherein information (14) relating to whether the captured CAN message (21) occurs first in the series of CAN messages (21-2n) occurring on CAN communication bus (4) is provided.

3. Method according to Claim 1 or 2, wherein information (14) relating to an order of the CAN messages (21-2n) occurring on the CAN communication bus (4) after entering the idle state is provided.

4. Method according to one of the preceding claims, wherein the information relating to temporal occurrence of the captured CAN message (21) is effected on the basis of a list (14) of at least some of the CAN messages (21-2n) occurring on CAN communication bus (4) since entering the idle state.

5. Method according to one of the preceding claims, wherein data content (32) of the captured CAN message (21) is captured, decrypted if necessary and displayed on the diagnostic test device (10).

6. Method according to one of the preceding claims, wherein an item of assignment information (40) for identifying the electronic control unit (6) emitting the captured CAN message (21) on the basis of an item of identification information (31) included in the captured CAN message (21) is stored in the diagnostic test device (10) .

7. Method according to one of the preceding claims, wherein the information (31, 41) for identifying the electronic control unit (6) emitting the captured CAN message (21) is displayed and stored by the diagnostic test device (10).

8. Method according to one of the preceding claims, wherein a capture time, in particular in the form of a time of day, of the captured CAN message (21) is displayed.

9. Method according to one of the preceding claims, wherein the diagnostic test device (10) filters out CAN messages from electronic control units (5, 6, 7) which are configured to emit at least one CAN message via the CAN communication bus (4) in the idle state of the vehicle (2) during proper operation.

## Revendications

1. Procédé de diagnostic d'un état dans un véhicule (2) qui comprend un bus de communication CAN (4) auquel sont connectées des unités de commande électroniques (5, 6, 7) du véhicule afin d'identifier un composant responsable d'une activation involontaire du bus de communication CAN après passage à un état de repos du véhicule, comprenant les étapes suivantes consistant à :
- établir un état de repos du véhicule (2) dans lequel les unités de commande électroniques (5, 6, 7) sont agencées pour ne pas émettre de message CAN sur le bus de communication CAN (4) en cours de fonctionnement normal en cas d'absence d'erreur, un contact du véhicule (2) étant coupé et le véhicule (2) étant verrouillé pour établir l'état de repos du véhicule (2),
- coupler un appareil de test de diagnostic (10) avec au moins un port de diagnostic (3) du véhicule (2) couplé au bus de communication CAN (4),
- surveiller le bus de communication CAN (4) dans une fonction de balayage permanente par l'appareil de test de diagnostic (10) quant à des messages CAN émis (21 à 2n) après passage à l'état de repos,
- détecter un message CAN (21) émis sur le bus de communication CAN (4) après passage à l'état de repos et attribuer par l'appareil de test de diagnostic (10) le message CAN détecté (21) à une unité de commande électronique (6) émettant le message CAN,
- fournir, par l'appareil de test de diagnostic (10), une information (14) concernant une apparition dans le temps du message CAN détecté (21) dans une série de messages CAN (21 à 2n) apparaissant sur le bus de communication CAN (4) avant le passage à l'état de repos, et
- fournir, par l'appareil de test de diagnostic (10), une information (31, 41) pour identifier l'unité de commande électronique (6) émettant le message CAN détecté (21).

2. Procédé selon la revendication 1, dans lequel une information (14) est fournie indiquant si le message CAN détecté (21) apparaît en premier dans la série de messages CAN (21 à 2n) apparaissant sur le bus de communication CAN (4).

3. Procédé selon la revendication 1 ou 2, dans lequel une information (14) est fournie concernant un ordre des messages CAN (21 à 2n) apparaissant sur le bus de communication CAN (4) après le passage à l'état de repos.

4. Procédé selon l'une quelconque des revendications précédentes, dans lequel l'information concernant l'apparition dans le temps du message CAN détecté (21) a lieu à l'aide d'une énumération (14) d'au moins une partie des messages CAN (21 à 2n) apparaissant sur le bus de communication CAN (4) depuis le passage à l'état de repos.

5. Procédé selon l'une quelconque des revendications précédentes, dans lequel un contenu de données (32) du message CAN détecté (21) est détecté, le cas échéant décrypté, et affiché sur l'appareil de test de diagnostic (10).

6. Procédé selon l'une quelconque des revendications précédentes, dans lequel une information d'attribution (40) est enregistrée dans l'appareil de test de diagnostic (10) pour identifier l'unité de commande électronique (6) émettant le message CAN détecté (21) à l'aide d'une information d'identification (31) contenue dans le message CAN détecté (21).

7. Procédé selon l'une quelconque des revendications précédentes, dans lequel l'information (31, 41) pour identifier l'unité de commande électronique (6) émettant le message CAN détecté (21) est affichée et sauvegardée par l'appareil de test de diagnostic (10).

8. Procédé selon l'une quelconque des revendications précédentes, dans lequel un instant de détection, en particulier sous la forme de l'heure, du message CAN détecté (21) est affiché.

9. Procédé selon l'une quelconque des revendications précédentes, dans lequel l'appareil de test de diagnostic (10) filtre des messages CAN provenant d'unités de commande électroniques (5, 6, 7) agencées pour émettre au moins un message CAN sur le bus de communication CAN (4) à l'état de repos du véhicule (2) en cours de fonctionnement normal.
